(19) Europäisches Patentamt
European Patent Office
Office européen des brevets

(11) **EP 2 887 172 B1**

(12) **EUROPÄISCHE PATENTSCHRIFT**

(45) Veröffentlichungstag und Bekanntmachung des Hinweises auf die Patenterteilung:
**01.05.2019   Patentblatt 2019/18**

(51) Int Cl.:
***G05D 24/00*** *(2006.01)*

(21) Anmeldenummer: **14197751.2**

(22) Anmeldetag: **12.12.2014**

(54) **Vorrichtung und Verfahren zur Bereitstellung eines in einem vorgegebenen Temperaturintervall einzusetzenden Fluids**

Device and method for providing a fluid to be inserted in a predetermined temperature interval

Dispositif et procédé de préparation d'un fluide à introduire pendant un intervalle de température prédéterminé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013   DE 102013114467**

(43) Veröffentlichungstag der Anmeldung:
**24.06.2015   Patentblatt 2015/26**

(73) Patentinhaber: **Herrmann, Albert Thomas**
**67677 Enkenbach-Alsenborn (DE)**

(72) Erfinder: **Herrmann, Albert Thomas**
**67677 Enkenbach-Alsenborn (DE)**

(74) Vertreter: **Patentanwälte Bernhardt / Wolff Partnerschaft mbB**
**Europaallee 17**
**66113 Saarbrücken (DE)**

(56) Entgegenhaltungen:
**DE-A1- 2 113 266     US-A- 4 420 008**

Beschreibung

Die Erfindung betrifft eine Vorrichtung zur Bereitstellung eines in einem vorgegebenen Umgebungstemperaturbereich einzusetzenden Schmiermittels, gemäß Anspruch 1.

Bekanntermaßen existiert eine Vielzahl von Anwendungen, in denen Fluide über einen mehr oder weniger breiten Temperaturbereich eine Funktion erfüllen müssen. Bei Schmierstoffen geht es vor allem darum, z.B. Grundöle, Fließfette und/oder Additive mit einem möglichst hohen Viskositätsindex zur Verfügung zu stellen, d.h. Schmierfluide mit geringer Abhängigkeit ihrer Viskosität von der Temperatur, sodass sie in einem breiten Temperaturbereich einsetzbar sind. An der Obergrenze eines solchen Temperaturbereichs muss dann zumindest noch gesichert sein, dass sich ein ausreichend dicker Schmierfilm bildet. An der Untergrenze eines solchen Temperaturbereichs darf beispielsweise die angewachsene Zähigkeit die gegenseitige Beweglichkeit geschmierter Teile noch nicht einschränken.

In Fällen, in denen breite Bereiche z.B. der Umgebungstemperatur abzudecken sind, müssen oftmals unterschiedliche Schmiermittel, z.B. gesondert für Sommer- und Winterbetrieb, eingesetzt werden, was mit Arbeits-, Geräte- und Kostenaufwand verbunden ist.

Die DE 21 13 266 A1 beschreibt eine Vorrichtung zum Mischen von Flüssigkeiten in einem bestimmten, einstellbaren Verhältnis. Die zu mischenden Flüssigkeiten fließen über getrennte Leitungen in einer gemeinsamen Leitung zusammen. Für das Mischungsverhältnis maßgebend sind neben den Druckabfällen in den getrennten Leitungen bis zur gemeinsamen Leitung die Strömungswiderstände in den getrennten Leitungen.

Aus der US 4 420 008 A geht ein Verfahren zum Transport von Rohöl in einer Pipeline hervor. Die Zufuhrmengen des Rohöls und eines Ölverdünners an einem Mischpunkt am Anfang der Pipeline werden so gesteuert, dass in der Pipeline eine gewünschte, für den Öltransport geeignete Mischviskosität aufrechterhalten wird. Die Steuerung erfolgt anhand erfasster, u.a. für die Viskositäten der zugeführten Komponenten maßgebender Messsignale.

Der Erfindung liegt die Aufgabe zugrunde, eine neue Vorrichtung zu schaffen, die einfach und unkompliziert zur Bereitstellung eines in einem breiten Temperaturbereich einsetzbaren Schmiermittels geeignet ist.

Die diese Aufgabe lösende Vorrichtung nach der Erfindung ist gekennzeichnet durch mehrere Vorratsbehälter, die Ausgangsfluide mit unterschiedlichen Viskositäten für das Schmiermittel enthalten, sowie Mischeinrichtungen zur Mischung der Ausgangsfluide in einem von der Umgebungstemperatur abhängigen Verhältnis, wobei die Mischeinrichtungen die Vorratsbehälter mit einer Mischkammer verbindende Leitungen umfassen und sich das Mischungsverhältnis anhand der von der Umgebungstemperatur abhängigen Strömungswiderstände der Ausgangsfluide in den Leitungen einstellt, und wobei die Viskositäten der Ausgangsfluide derart ausgewählt sind, dass die Mischkammer im gesamten Umgebungstemperaturbereich ein Mischfluid mit einer zur Verwendung als Schmiermittel geeigneten Mischviskosität bereitstellt.

Erfindungsgemäß wird ein Schmiermittel entsprechend einem Bedarf kontinuierlich oder diskontinuierlich als Mischfluid aus Ausgangsprodukten unterschiedlicher Viskosität erzeugt, derart, dass sich die Mischviskosität innerhalb des vorgegebenen Umgebungstemperaturbereichs nur zwischen vorgegebenen, die Verwendbarkeit des Fluids als Schmiermittel sichernden Grenzen verändert.

Die Vorrichtung eignet sich insbesondere für Anwendungen, bei denen das Schmiermittel laufend erzeugt und verbraucht wird (sog. Verlustschmierung), z.B. für die Schmierung der Spurkränze von Schienenfahrzeugen, die Schmierung von Weichen, die Ölung von Sägeketten, die Schmierung von Drehkränzen an Maschinen wie z.B. Windkraftanlagen, Baggern, Kränen, Teleskopen, Antennen usw.. Es versteht sich, dass die Art und Weise der Applizierung des Schmiermittels dabei von untergeordneter Bedeutung ist.

Während es denkbar wäre, das Mischungsverhältnis anhand von Dosiereinrichtungen einzustellen, die durch Temperatursensoren gesteuert werden, welche die Temperaturen der Ausgangsfluide erfassen, weisen in der Vorrichtung nach der Erfindung die Mischeinrichtungen die Vorratsbehälter mit einer Mischkammer verbindende Leitungen auf. Vorteilhaft stellt sich durch solche Leitungen das Mischungsverhältnis anhand der über die Viskosität von der Temperatur abhängigen Strömungswiderstände der Ausgangsfluide in den Leitungen von selbst ein.

Verhältnismäßig einfach lassen sich durch geeignete Druckdifferenzen zwischen den Vorratsgefäßen und der Mischeinrichtung die jeweils benötigten Gesamtvolumenströme einstellen.

Die Leitungen können in ihrer geometrischen Form und in ihren Abmessungen übereinstimmen oder alternativ unterschiedlich sein.

Der die Strömungswiderstände in den Leitungen überwindende Förderdruck kann allein durch die Schwerkraft der Fluide bestimmt sein. Alternativ oder zusätzlich kann es auf eine Gasdruckdifferenz (z.B. Luftdruckdifferenz) zwischen den Vorratsgefäßen und der Mischkammer ankommen. Vorteilhaft ist eine solche Vorrichtung, die gänzlich frei von Sensoren und Steuereinrichtungen ist, wartungsarm und störunanfällig.

Das von der Temperatur abhängige Mischungsverhältnis ergibt sich bei laminarer Strömung allein aus dem Gesetz von Hagen-Poiseuille und der Abhängigkeit der Viskositäten von der Temperatur. Bei nicht laminarer Strömung gelten andere mathematische Zusammenhänge.

Die Viskosität eines ersten Ausgangsfluids ist zweckmäßig über das gesamte Temperaturintervall geringer als die Viskosität eines zweiten Ausgangsfluids.

Ferner kann die Abnahme der Viskosität bezogen auf das Temperaturintervall eines ersten Ausgangsfluids größer als die Abnahme der Viskosität eines zweiten Ausgangsfluids vorteilhaft sein.

In einer weiteren bevorzugten Ausführungsform liegen die Viskositäten eines ersten Ausgangsfluids oberhalb einer Obergrenze des durch die Mischviskosität einzuhaltenden Wertebereichs und die Viskositäten eines zweiten Ausgangsfluids unterhalb eine Untergrenze dieses Wertebereichs.

Zweckmäßig ist die Höhe der Vorratsbehälter deutlich kleiner als der von den Leitungen durchlaufene Höhenunterschied oder/und der Gasdruckunterschied zwischen den Vorratsgefäßen und der Mischkammer jeweils so bemessen, dass unterschiedliche Absenkungen des Fluidspiegels in den Vorratsbehältern keinen Einfluss auf die Volumenströme und dadurch das Mischungsverhältnis haben.

Die Erfindung wird nachfolgend anhand eines Ausführungsbeispiels und der beiliegenden, sich auf dieses Ausführungsbeispiel beziehenden Zeichnungen weiter erläutert. Es zeigen:

Fig. 1 eine erfindungsgemäße Vorrichtung in schematischer Darstellung, und

Fig. 2 eine die Funktion der Vorrichtung von Fig. 1 erläuternde Darstellung.

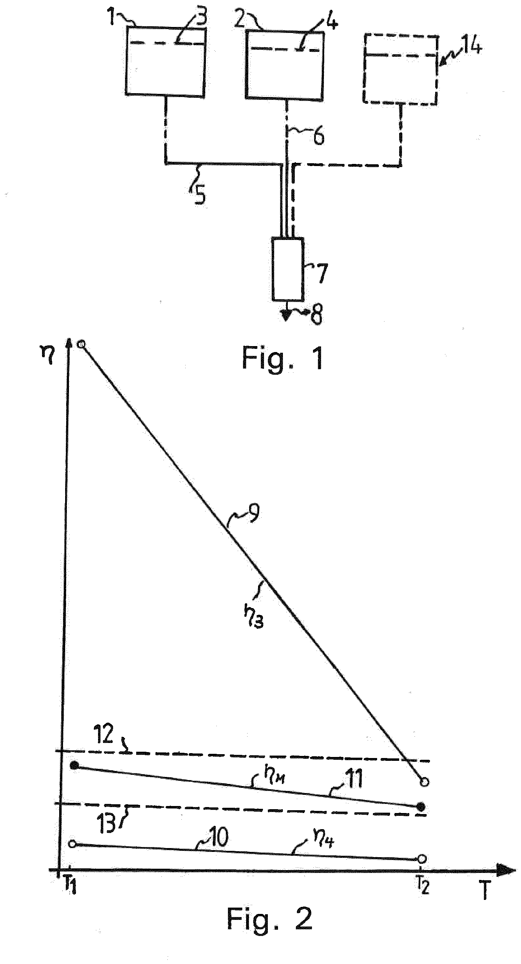

Eine Vorrichtung zum Bereitstellen eines in einem vorgegebenen Umgebungstemperaturintervall einzusetzenden Fluids, z.B. eines Schmierstoffs für die Schmierung der Radkränze von Schienenfahrzeugen, weist Behälter 1 und 2 zur Aufnahme von Ausgangsfluiden 3 und 4 auf. Strichlinien in Fig. 1 bei 14 sollen andeuten, dass mindestens noch ein weiterer solcher Vorratsbehälter vorhanden sein könnte.

Der Vorratsbehälter 1 ist über eine Leitung 5 und der Vorratsbehälter 2 über eine Leitung 6 mit einer Mischkammer 7 verbunden, die z.B. einen Rührmischer, einen Mikromischer, einen Inlinemischer oder/und Bernouilli-Mischer umfassen kann. An einem Auslass 8 wird ein durch Mischen der Ausgangsfluide 3 und 4 erzeugtes Mischfluid bereitgestellt.

In dem gezeigten Ausführungsbeispiel sind die Leitungen 5,6 so bemessen, dass die Fluide 3,4 unter dem Einfluss ihrer Schwerkraft und/oder der Differenz des Gasdrucks in den Vorratsgefäßen und dem Mischaggregat unter laminarer Durchströmung der Leitungen 5,6 in die Mischkammer 7 gelangen. Die den Vorratsbehältern 1,2 dabei pro Zeiteinheit entnommenen Fluidmengen sind gering im Vergleich zu den Vorratsmengen. Entsprechend geringe Mengen an Mischfluid werden daher am Auslass 8 z.B. tropfenweise abgegeben. Der durch die Leitungen 5,6 überbrückte Höhenunterschied ist deutlich größer als die Höhe der Vorratsbehälter 1,2, sodass Schwankungen der Höhe des Fluidspiegels in den Vorratsbehältern nur geringen Einfluss auf den für die Volumenströme in den Leitungen 5,6 maßgebenden Förderdruck haben.

Ein Kurvenzug 9 in Fig. 2 zeigt vereinfacht die Abhängigkeit der Viskosität $\eta_3$ des Fluids 3 in Abhängigkeit von der Temperatur T im Umgebungstemperaturintervall $T_2 - T_1$. Ein Kurvenzug 10 bezieht sich auf das Fluid 4 im Vorratsbehälter 2. Wie zu erkennen ist, übersteigt die Viskosität $\eta_3$ des Fluids 3 im gesamten Umgebungstemperaturintervall $T_2 - T_1$ um ein Vielfaches die Viskosität $\eta_4$ des Fluids. Ein weiterer Unterschied zwischen den Fluiden 3,4 besteht darin, dass bezogen auf die Intervalllänge $T_2 - T_1$ die Viskosität $\eta_3$ des Fluids 3 wesentlich stärker abnimmt als die Viskosität $\eta_4$ des Fluids 4.

Das am Auslass 8 abgegebene Mischfluid weist eine Mischviskosität auf, die bei gegebener Temperatur T allein vom Verhältnis der durch die Leitungen 5,6 tretenden Volumenströme $I_3$, $I_4$ des Fluids 3 bzw. des Fluids 4 abhängt. Bei laminarer Strömung bestimmt sich dieses Verhältnis nach dem Gesetz von Hagen-Poiseuille und es gilt:

$$I_3 = K_3/\eta_3 \qquad (1)$$

$$I_4 = K_4/\eta_4 \qquad (2).$$

In (1) und in (2) bezeichnen $\eta_3$ und $\eta_4$ die Viskositäten der Fluide 3 und 4. In die Faktoren $K_3, K_4$ gehen jeweils Geometrieparameter der Leitung 5 bzw. 6, nämlich der Rohrradius und die Leitungslänge, sowie die den Volumenstrom erzeugende Druckdifferenz zwischen den Leitungsenden ein. Für die Anordnung nach Fig. 1 sind diese Faktoren als konstant anzusehen. Für das Verhältnis der Volumenströme $I_3 : I_4$ gilt:

$$I_3/I_4 = K_3/K_4 \times \eta_4/\eta_3 \qquad (3).$$

Wie sich Fig. 2 entnehmen lässt, ändert sich über das Betriebstemperaturintervall $T_2 - T_1$ das Verhältnis $\eta_4/\eta_3$. Es steigt von $T_1$ bis $T_2$ etwa um den Faktor 5 an. Infolge der starken Abnahme der Viskosität $\eta_3$ des Fluids 3 fließt bei $T_2$ durch die Leitung 5 ein wesentlich höherer Volumenstrom $I_3$ als bei der Temperatur $T_1$. Vor allem ist der Volumenstrom $I_3$ im Verhältnis zu dem Volumenstrom $I_4$ in der Leitung 6 wegen der geringeren relativen Änderung von $\eta_4$ im Verhältnis deutlich erhöht. Bei $T_2$ macht sich daher für die Mischviskosität $\eta_M$ die höhere Viskosität $\eta_3$ des Fluids 3 stärker bemerkbar.

Für die Mischviskosität $\eta_M$ ergibt sich ein Kurvenzug 11, der sich im Umgebungstemperaturintervall $T_2 - T_1$ zwischen einer Obergrenze 12 und eine Untergrenze 13 eines vorgegebenen Toleranzbereiches der Viskosität bewegt. So lässt sich durch die Fluide 3,4, deren Viskositäten im Wesentlichen außerhalb dieses Toleranzbereiches liegen, ein gewünschter Verlauf der Mischviskosität $\eta_M$ innerhalb dieses Bereiches einstellen, d.h. ein Mischfluid mit hohem Viskositätsindex bilden.

Die in Fig. 1 gezeigte Vorrichtung verwendet weder Sensoren noch Steuereinrichtungen, auch keinerlei Ventile oder Einrichtungen zur Beeinflussung der Geometrie der Leitungen. Die Vorrichtung ist daher außerordentlich wartungsarm und störunanfällig.

**Patentansprüche**

1. Vorrichtung zur Bereitstellung eines in einem vorgegebenen Umgebungstemperaturbereich ($T_2$ - $T_1$) einzusetzenden Fluids, **gekennzeichnet durch** mehrere Vorratsbehälter (1,2), die Ausgangsfluide (3,4) mit unterschiedlichen Viskositäten ($\eta_3$,$\eta_4$) für ein Schmiermittel enthalten, sowie Mischeinrichtungen zur Mischung der Ausgangsfluide (3,4) in einem von der Umgebungstemperatur (T) abhängigen Verhältnis aufweist, wobei die Mischeinrichtungen (5-7) die Vorratsbehälter (1,2) mit einer Mischkammer (7) verbindende Leitungen (5,6) umfassen und sich das Mischungsverhältnis anhand der von der Umgebungstemperatur (T) abhängigen Strömungswiderstände der Ausgangsfluide (3,4) in den Leitungen (5,6) einstellt und wobei die Viskositäten ($\eta_3$,$\eta_4$) der Ausgangsfluide (3,4) derart ausgewählt sind, dass die Mischkammer (7) im gesamten Umgebungstemperaturbereich ($T_2$ - $T_1$) ein Mischfluid mit einer zur Verwendung als Schmiermittel geeigneten Mischviskosität ($\eta_M$) bereitstellen kann.

2. Vorrichtung nach Anspruch 1, **dadurch gekennzeichnet,** **dass** die Leitungen (5,6) in ihrer geometrischen Form und in ihren Abmessungen übereinstimmen oder unterschiedlich sind.

3. Vorrichtung nach Anspruch 1 oder 2, **dadurch gekennzeichnet,** **dass** sich ein die Strömungswiderstände der Fluide (3,4) in den Leitungen (5,6) überwindender Förderdruck durch die Schwerkraft der Fluide (3,4) und ggf. Gasdruckdifferenzen eingestellt.

4. Vorrichtung nach einem der Ansprüche 1 bis 3, **dadurch gekennzeichnet,** **dass** sich in den Leitungen (5,6) eine laminare oder turbulente Strömung der Ausgangsfluide (3,4) ausbildet.

5. Vorrichtung nach einem der Ansprüche 1 bis 4, **dadurch gekennzeichnet,** **dass** die Viskosität ($\eta_3$) eines ersten Ausgangsfluids (3) über das gesamte Temperaturintervall ($T_2$ - $T_1$) größer als die Viskosität ($\eta_4$) eines zweiten Ausgangsfluids (4) ist.

6. Vorrichtung nach einem der Ansprüche 1 bis 5, **dadurch gekennzeichnet,** **dass** die Abnahme der Viskosität ($\eta_3$) über das Temperaturintervall ($T_2$ - $T_1$) eines ersten Ausgangsfluids (3) größer als die Abnahme der Viskosität ($\eta_4$) eines zweiten Ausgangsfluids (4) ist.

7. Vorrichtung nach einem der Ansprüche 1 bis 6, **dadurch gekennzeichnet,** **dass** die Viskosität ($\eta_3$) eines ersten Ausgangsfluids (3) und die Viskosität ($\eta_4$) eines zweiten Ausgangsfluids (4) im gesamten Temperaturintervall ($T_2$ - $T_1$) außerhalb des vorgegebenen Wertebereiches (12,13) der Mischviskosität ($\eta_M$) liegt.

8. Vorrichtung nach einem der Ansprüche 1 bis 7, **dadurch gekennzeichnet,** **dass** die Höhen der Vorratsbehälter (1,2) kleiner als der von den Leitungen (5,6) durchlaufende Höhenunterschiede sind.

**Claims**

1. Apparatus for providing a fluid which is to be used in a predefined ambient temperature range ($T_2$ - $T_1$), **characterized by** multiple supply containers (1, 2) which contain starting fluids (3, 4), having different viscosities ($\eta_3$, $\eta_4$), for a lubricant, and by mixing devices for mixing the starting fluids (3, 4) in a ratio dependent on the ambient temperature (T), wherein the mixing devices (5-7) comprise lines (5, 6) which connect the supply containers (1, 2) to a mixing chamber (7), and the mixing ratio is established on the basis of the flow resistances, dependent on the ambient temperature (T), of the starting fluids (3, 4) in the lines (5, 6), and wherein the viscosities ($\eta_3$, $\eta_4$) of the starting fluids (3, 4) are selected such that, in the entire ambient temperature range ($T_2$ - $T_1$), the mixing chamber (7) is able to provide a mixed fluid having a mixed viscosity ($\eta_M$) which is suitable for the use as a lubricant.

2. Apparatus according to Claim 1, **characterized** **in that** the lines (5, 6) correspond, or differ, in terms of their geometric shape and in terms of their dimensions.

3. Apparatus according to Claim 1 or 2, **characterized** **in that** a conveying pressure which overcomes the flow resistances of the fluids (3, 4) in the lines (5, 6) is established by the gravitational force of the fluids (3, 4) and, if appropriate, gas pressure differences.

**4.** Apparatus according to one of Claims 1 to 3, **characterized in that** a laminar or turbulent flow of the starting fluids (3, 4) is formed in the lines (5, 6).

**5.** Apparatus according to one of Claims 1 to 4, **characterized in that**, over the entire temperature interval $(T_2 - T_1)$, the viscosity $(\eta_3)$ of a first starting fluid (3) is greater than the viscosity $(\eta_4)$ of a second starting fluid (4).

**6.** Apparatus according to one of Claims 1 to 5, **characterized in that** the decrease in the viscosity $(\eta_3)$ over the temperature interval $(T_2 - T_1)$ of a first starting fluid (3) is greater than the decrease in the viscosity $(\eta_4)$ of a second starting fluid (4).

**7.** Apparatus according to one of Claims 1 to 6, **characterized in that**, in the entire temperature interval $(T_2 - T_1)$, the viscosity $(\eta_3)$ of a first starting fluid (3) and the viscosity $(\eta_4)$ of a second starting fluid (4) lie outside the predefined value range (12, 13) of the mixed viscosity $(\eta_M)$.

**8.** Apparatus according to one of Claims 1 to 7, **characterized in that** the heights of the supply containers (1, 2) are less than the height difference traversed by the lines (5, 6).

**Revendications**

**1.** Dispositif pour fournir un fluide à mettre en oeuvre dans une plage de température ambiante $(T_2 - T_1)$ donnée, **caractérisé par** plusieurs réservoirs (1, 2) qui contiennent des fluides de départ (3, 4) ayant différentes viscosités $(\eta_3, \eta_4)$ pour un lubrifiant, ainsi que par des moyens de mélange pour mélanger les fluides de départ (3, 4) dans un rapport dépendant de la température ambiante (T), les moyens de mélange (5 - 7) comprenant des conduites (5, 6) qui relient les réservoirs (1, 2) à une chambre de mélange (7), et le rapport de mélange s'établit à la base des résistances à l'écoulement des fluides de départ (3, 4), dépendantes de la température ambiante (T), dans les conduites (5, 6), les viscosités $(\eta_3, \eta_4)$ des fluides de départ (3, 4) sont choisies de telle sorte que la chambre de mélange (7) est apte à fournir, dans la totalité de la plage de température ambiante $(T_2 - T_1)$, un fluide de mélange ayant une viscosité de mélange $(\eta_M)$ appropriée à l'utilisation en tant que lubrifiant.

**2.** Dispositif selon la revendication 1,

**caractérisé en ce que** les conduites (5, 6) coïncident ou se distinguent quant à leur forme géométrique et à leurs dimensions.

**3.** Dispositif selon la revendication 1 ou 2, **caractérisé en ce que** une pression de convoyage surmontant les résistances à l'écoulement des fluides (3, 4) dans les conduites (5, 6) s'établit par la pesanteur des fluides (3, 4) et le cas échéant par des différences de pression de gaz.

**4.** Dispositif selon l'une des revendications 1 à 3, **caractérisé en ce que** il se forme un écoulement laminaire ou turbulent des fluides de départ (3, 4) dans les conduites (5, 6).

**5.** Dispositif selon l'une des revendications 1 à 4, **caractérisé en ce que** la viscosité $(\eta_3)$ d'un premier fluide de départ (3) sur tout l'intervalle de température $(T_2 - T_1)$ est supérieure à la viscosité $(\eta_4)$ d'un second fluide de départ (4).

**6.** Dispositif selon l'une des revendications 1 à 5, **caractérisé en ce que** la diminution de la viscosité $(\eta_3)$ sur l'intervalle de température $(T_2 - T_1)$ d'un premier fluide de départ (3) est plus importante que la diminution de la viscosité $(\eta_4)$ d'un second fluide de départ (4).

**7.** Dispositif selon l'une des revendications 1 à 6, **caractérisé en ce que** la viscosité $(\eta_3)$ d'un premier fluide de départ (3) et la viscosité $(\eta_4)$ d'un second fluide de départ (4) dans tout l'intervalle de température $(T_2 - T_1)$ se situent à l'extérieur de la plage de valeurs donnée (12, 13) de la viscosité de mélange $(\eta_M)$.

**8.** Dispositif selon l'une des revendications 1 à 7, **caractérisé en ce que** les hauteurs des réservoirs (1, 2) sont inférieures à la différence en hauteur parcourue par les conduites (5, 6).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2113266 A1
- US 4420008 A